Europäisches Patentamt

European Patent Office

Office européen des brevets

(11) Veröffentlichungsnummer : **0 388 652 B1**

(12) **EUROPÄISCHE PATENTSCHRIFT**

(45) Veröffentlichungstag der Patentschrift :
04.08.93 Patentblatt 93/31

(51) Int. Cl.⁵ : **B60B 33/02**

(21) Anmeldenummer : **90103417.3**

(22) Anmeldetag : **22.02.90**

(54) **Feststellvorrichtung für Lenkrollen.**

(30) Priorität : **23.03.89 DE 3909629**

(43) Veröffentlichungstag der Anmeldung :
**26.09.90 Patentblatt 90/39**

(45) Bekanntmachung des Hinweises auf die
Patenterteilung :
**04.08.93 Patentblatt 93/31**

(84) Benannte Vertragsstaaten :
**ES FR GB IT NL**

(56) Entgegenhaltungen :
**EP-A- 0 015 774**
**DE-A- 3 136 260**
**DE-A- 3 242 056**
**DE-A- 3 624 089**

(73) Patentinhaber : **Albert Schulte Söhne GmbH. &**
**Co.**
**Postfach 15 50**
**W-5632 Wermelskirchen (DE)**

(72) Erfinder : **Schulte, Rolf**
**Adlerstrasse 70**
**W-5630 Remscheid (DE)**

(74) Vertreter : **Mentzel, Norbert, Dipl.-Phys. et al**
**Patentanwälte Dipl.-Phys. Buse Dipl.-Phys.**
**Mentzel Dipl.-Ing. Ludewig Unterdörnen 114**
**W-5600 Wuppertal 2 (DE)**

**Beschreibung**

Die Erfindung betrifft eine Feststellvorrichtung für Lenkrollen von insbesondere Müllcontainern gemäß dem Oberbegriff des Anspruchs 1. Eine derartige Vorrichtung ist z.B. aus dem DE-U-8 706 475 bekannt.

Bei einer aus dem DE-U- 8 706 475 ersichtlichen Feststellvorrichtung ist der Stellbolzen ausschließlich in dem den Nocken aufnehmenden Führungsgehäuse längsverschiebbar angeordnet, wobei das Führungsgehäuse seinerseits in einem Lagerkopf gehalten ist. Der Stellbolzen ragt nach unten in die Radgabelhöhlung ein und beaufschlagt eine in der Radgabelhöhlung federnd angeordnete Bremslasche, die dem Rücken der Radgabel fest zugeordnet ist. Der Stellbolzen läßt sich aus funktionalen Gründen nur über einen bestimmten Längenbereich führen, so daß es infolge des relativ langen, ungeführten Stellbolzenbereiches zu Verklemmungen dieses Stellbolzens am Führungsgehäuse kommt, so daß die Federkraft der Bremslasche nicht ausreichend sein kann, um den Stellbolzen bei gelöster Sicherungsschließe in die Freigabelage zu überführen.

Die Aufgabe der vorliegenden Erfindung besteht darin, eine Feststellvorrichtung für Lenkrollen der eingangs genannten Art dahingehend zu verbessern, daß am Stellbolzen quer zu seiner Längsrichtung angreifende Kräfte auf breiter Basis abgestützt werden können, um Verkantungen des Stellbolzens zu verhindern.

Diese Aufgabe ist erfindungsgemäß dadurch gelöst, daß der Stellbolzen außer im Lagerkopf auch in einer dem Radgabelrücken zugeordneten Führungshülse abgestützt ist. Dadurch läßt sich der Stellbolzen einerseits an seinem Stellende und andererseits im Bereich seines Betätigungsendes führen, so daß einer Stellkräfte erhöhenden Verkantung entgegengewirkt ist. Obschon es denkbar ist, eine solche Führungshülse auch als eigenständigen Nabenteil auszubilden und lösbar oder unlösbar mit der Radgabel zu verbinden, ist es doch nach einem Ausgestaltungsmerkmal der Erfindung vorteilhaft, wenn die Führungshülse als einstückiger Formteil mit einer dem Radgabelrücken fest verbundenen, die Radgabelhöhlung überbrückenden Halteplatte ausgebildet ist. Dabei kann die Führungshülse vorteilhaft aus dem Fortsatz einer eine Sperrscheibe zur Blockierung der Schwenkbewegung der Radgabel formschlüssig aufnehmenden Vertiefung der Halteplatte gebildet sein.

Um einerseits eine verschleißbedingte Nachstellung der federnden Bremslasche zu ermöglichen, und andererseits den Stellbolzen an seinem Betätigungsende sicher zu führen, weist der Stellbolzen vorteilhaft an seinem Unterende eine mit der federnden Bremslasche in Kontakt befindliche Hutmutter auf, die mit einem Führungskragen in die Führungshülse längsverschiebbar eingreift.

Damit die Führungshülse im Bereich des Betätigungsendes des Stellbolzens ohne großen Fertigungsaufwand angeordnet werden kann, ist die die Führungshülse aufweisende Halteplatte vorteilhaft am Radgabelrücken mittels Ausschnitte der Halteplatte durchdringenden, aus dem Radgabelrücken ausgeprägten Haltezungen verklemmt.

Die Erfindung ist auf der Zeichnung in einem Ausführungsbeispiel dargestellt und wird nachfolgend näher erläutert. Es zeigen:

Fig. 1   die mit der erfindungsgemäßen Feststellvorrichtung ausgestattete Lenkrolle in einem Längsschnitt nach der Linie I - I von Fig. 2 bei entferntem Laufrad,

Fig. 2   die aus Fig. 1 ersichtliche Lenkrolle in einer im Bereich des Nockens der Feststellvorrichtung aufgebrochenen Vorderansicht.

Das Laufrad 10 ist zwischen den Schenkeln einer Radgabel 11 auf einer die Gabelschenkel durchquerenden Achse 13 gelagert, wobei die Gabelschenkel durch den Gabelrücken 12 miteinander einstückig verbunden sind. Der in seinem Zentrum topfartig ausgepreßte Gabelrücken 12 bildet einen Lagerkopf 15, der an seinem Topfboden als Laufbahn für zwei Kugelkränze hergerichtet ist, und der zwischen eine eine zentrische Bohrung 16 aufweisende Anschlußplatte 17 und einen damit zentrisch verbundenen Lagerring 18 faßt. Sowohl die Anschlußplatte 17 als auch der Lagerring 18 weisen jeweils eine Gegenlaufbahn für die am Topfboden 14 abgestützten Kugelkränze auf. Zentrisch zur Bohrung 16 ist an der Anschlußplatte 17 des Lagerkopfes 15 ein Rohrmantel 19, beispielsweise durch Verschweißung, befestigt, wobei im Rohrmantel 19 zwei ein Führungsgehäuse 20 bildende Halbschalen 21 und 22 formschlüssig durch oberseitig in Ausnehmungen der Halbschalen eingebördelte Zungen festgelegt sind. Das Führungsgehäuse 20 weist unterseitig einen Aufnahmeraum für den Vierkantschaft 24 eines Stellbolzens 23 auf, der oberseitig mit einer Kugelkalotte 25 an der Steuerkurve 27 eines Nockens 26 anliegt. Diese Steuerkurve 27 umfaßt einerseits eine Rastausnehmung und andererseits einen in bezug auf die Feststellbewegung ansteigenden Sperrkurvenabschnitt. Der Nocken 26 stützt sich mit seinem mehr als halbkreisförmigen Außenumfang an einer halbkreisförmigen Führungsbahn im Aufnahmeraum der Halbschalen 21 und 22 ab und weist Anschlagnasen 28 auf, die sich an Horizontalwandungen der Halbschalen 21 und 22 je nach Stell-Lage zur Anschlagbegrenzung wechselweise anlegen können. Im Zentrum des Nockens befindet sich eine unrunde Mitnehmerbohrung 29, in die der unrunde Abschnitt einer nicht dargestellten Stellwelle eingreift.

Am Unterende des Stellbolzens 23 befindet sich ein Gewindezapfen, der eine Hutmutter 30 trägt. Diese Hutmutter weist einen Führungskragen 31 auf, der schließend längsverschiebbar in einer dem Radgabelrücken 12 zugeordneten Führungshülse 32 abgestützt ist. Bei dem dargestellten Ausführungsbeispiel ist die Führungshülse als einstückiger Formteil einer mit dem Radgabelrücken fest verbundenen, die Radgabelhöhlung überbrückenden Halteplatte 33 ausgebildet. Dabei bildet die Führungshülse 32 den Fortsatz einer eine Sperrscheibe 34 formschlüssig aufnehmenden Vertiefung 35 der Halteplatte 33. Diese Halteplatte 33 weist beiderseits ihrer Führungshülse 32 Ausschnitte auf, in welche ausgeprägte Haltezungen 36 des Gabelrückens 12 eingreifen, die auf der Unterseite der Halteplatte 33 zu deren Festlegung am Gabelrücken 12 abgebogen sind.

Die Hutmutter 30 wird unterseitig von einer am Gabelrücken 12 festgelegten und im Lösesinn eigenfedernden Bremslasche 37 beaufschlagt.

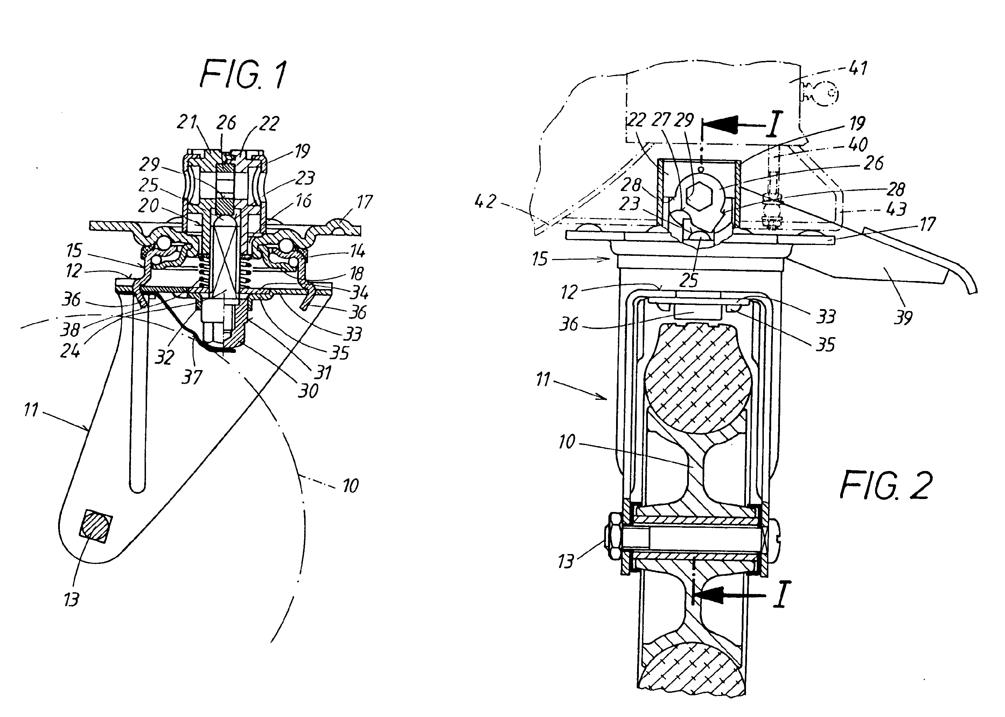

An die Sperrscheibe 34 legt sich oberseitig eine Druckfeder 38 an, die an der Unterseite der Halbschalen 21 und 22 abgestützt ist. Diese, den Vierkantschaft 24 schließend umfassende Sperrscheibe 34 kann im Lösesinne vom Rand des Führungskragens 31 der Hutmutter 30 mitgenommen werden. In der aus Fig. 1 ersichtlichen Sperrlage greift die Sperrscheibe 34 in die eine entsprechende Innenzahnung aufweisende Vertiefung 35 der Halteplatte 33. Mit der nicht dargestellten und in die Mitnehmerbohrung 29 des Nocken 26 eingreifenden Schaltwelle ist ein Schalthebel 39 drehfest verbunden, mit dem andererseits ein Riegelzapfen 40 drehgelenkig in Verbindung steht, der seinerseits in bekannter Weise in eine Sicherungsschließe 41 eines Müllcontainers 42 eingreift. Dieser Müllcontainer 42 ist in bekannter Weis über Konsolen 43 mit der Anschlußplatte 17 des Lagerkopfes 15 fest verbunden.

Bei der aus der Zeichnung ersichtlichen Feststell-Lage ist der Schalthebel 39 nach unten gedrückt, so daß der ansteigende Abschnitt der Steuerkurve 27 in Anlage an der Kugelkalotte 25 des Stellbolzens 23 ist, der in entsprechend niedergedrückter Position die Bremslasche 37 an den Umfang des Laufrades 10 andrückt, und außerdem die Sperrlage für die durch die Druckfeder 38 beaufschlagte Sperrscheibe 34 ermöglicht. Dadurch wird durch den Riegelzapfen 40 eine Raststellung in der Sicherungsschließe 41 erzielt, so daß trotz Wirkung der Eigenfederung der Bremslasche 37 der Stellbolzen 23 nicht nach oben bewegt werden kann. Durch die Abstützung des Stellbolzens 23 einerseits in den vom Rohrmantel 19 gestützten Halbschalen 21 und 22 und andererseits in der Führungshülse 23 ist eine Verkantung des Stellbolzens 23 ausgeschlossen, so daß durch Betätigen der Sicherungsschließe mittels eines dafür vorgesehenen Schlüssels die Verriegelung innerhalb der Sicherungsschließe gelöst und der Riegelzapfen 40 freigegeben wird, so daß die Federkraft der Bremslasche 38 wirksam werden kann und infolge der durch den geneigten Abschnitt der Steuerkurve 27 erzeugten, horizontalen Kraftkomponente den Nocken 26 in eine solche Lage zu drücken vermag, daß die Kugelkalotte 25 des Stellbolzens 23 in die Rastausnehmung des Nockens 26 eindringen kann. Einerseits gibt dadurch die Bremslasche 37 das Laufrad frei, und andererseits ist die Sperrscheibe 34 gegen die Kraft ihrer Rückstellfeder 38 aus der Vertiefung 35 der Halteplatte 33 gehoben, so daß auch einer Verschwenkung der Radgabel kein Widerstand entgegengesetzt wird. Mit der letztgenannten Rückstellung des Nockens erfolgt auch eine Verschwenkung des Schalthebels 39 in eine Loslage nach oben. Zur Wiederherstellung der Sperrlage ist der Schalthebel 39 erneut in die aus Fig. 2 ersichtliche Position zu drücken, wobei die aus Fig. 1 ersichtliche Sperrlage wieder erreicht wird.

Wie bereits erwähnt, gibt die vorbeschriebene und dargestellte Ausführungsform die Erfindung lediglich beispielsweise wieder, die keinesfalls allein darauf beschränkt ist. Es sind vielmehr noch mancherlei andere Ausgestaltungen und Ausführungsformen der Erfindung denkbar. Alle in der Beschreibung erwähnten und-/oder in der Zeichnung dargestellten neuen Merkmale sind erfindungswesentlich, auch wenn sie in den Ansprüchen nicht ausdrücklich beansprucht sind.

**Bezugszeichenliste :**

| | |
|---|---|
| 10 Laufrad | 27 Steuerkurve |
| 11 Radgabel | 28 Anschlagnase |
| 12 Gabelrücken | 29 Mitnehmerbohrung |
| 13 Achse | 30 Hutmutter |
| 14 Topfboden | 31 Führungskragen |
| 15 Lagerkopf | 32 Führungshülse |
| 16 Bohrung | 33 Halteplatte |
| 17 Anschlußplatte | 34 Sperrscheibe |
| 18 Lagerring | 35 Vertiefung |
| 19 Rohrmantel | 36 Haltezunge |
| 20 Führungsgehäuse | 37 Bremslasche |
| 21 Halbschale | 38 Druckfeder |
| 22 Halbschale | 39 Schalthebel |
| 23 Stellbolzen | 40 Riegelzapfen |
| 24 Vierkantschaft | 41 Sicherungsschließe |
| 25 Kugelkalotte | 42 Müllcontainer |
| 26 Nocken | 43 Konsol |

**Patentansprüche**

1. Feststellvorrichtung für Lenkrollen von insbesondere Müllcontainern (42) mit einer Sicherungsschließe (41), wobei die Schwenkbewegung der mittels eines Lagerkopfes (15) befestigten Radgabel (11) und die Drehbewegung des Laufrades (10) durch Verdrehen eines mit einer Stellwelle drehfest verbundenen, eine die Löselage sichernde Rastausnehmung aufweisenden Nockens (26) blockierbar sind, wozu der Nocken (26) einen im Lagerkopf (15) geführten und diesen zentral durchdringenden Stellbolzen (23) beaufschlagt, der durch den Radgabelrücken (12) hinduchgeführt in die Radgabelhölung mit einer Hutmutter (30) einragend von einer federnden Bremslasche (37) im Lösesinne belastet ist, wobei der Stellbolzen (23) außer im Führungsgehäuse (20) auch in der Durchführung des Radgabelrückens (12) abgestützt ist, **dadurch gekennzeichnet,** daß die Durchführung als Führungshülse (32) ausgebildet ist, die aus einem einstückigen Formteil einer mit dem Radgabelrücken (12) fest verbundenen, die Radgabelhöhlung überbrückenden Halteplatte (33) besteht und die Hutmutter (30) mit einem Führungskragen (31) in die Führungshülse (32) längsverschiebbar eingreift.

2. Feststellvorrichtung nach Anspruch 1, dadurch gekennzeichnet, daß die Führungshülse (32) aus dem Fortsatz einer eine Sperrscheibe (34) zur Blockierung der Schwenkbewegung der Radgabel (11) formschlüssig aufnehmenden Vertiefung (35) der Halteplatte (33) gebildet ist.

3. Feststellvorrichtung nach einem oder mehreren der vorhergehenden Ansprüche, dadurch gekennzeichnet, daß die die Führungshülse (32) aufweisende Halteplatte (33) am Radgabelrücken (12) mittels Ausschnitte der Halteplatte (33) durchdringenden, aus dem Radgabelrücken ausgeprägten Haltezungen (36) verklemmt ist.

## Claims

1. A device for locking castors, particularly of refuse containers (42) with a retaining lock (41), the pivoting movement of the wheel fork (11) which is fixed by means of a bearing head (15) and the rotary movement of the wheel (10) being capable of being arrested by rotation of a cam member (26) which is rotationally rigidly connected to a positioning spindle and comprising a catch recess which secures the released position, the cam member (26) acting upon a positioning rod (23) guided in the bearing head (15) through the centre of which it passes, the positioning rod (23) passing through the back (12) of the wheel fork so that its cap nut (30) penetrates the wheel fork cavity and being biased in the released direction by a spring-action brake pull rod (37), the positioning rod (23) being braced not only in the guide housing (20) but also in the passage through the back (12) of the wheel fork, characterised in that the bushing is constructed as a guide sleeve (32) which consists of a one-piece moulding in a supporting plate (33) rigidly connected to the back (12) of the wheel fork and bridging the wheel fork cavity, the cap nut (30) having a guide collar (31) which engages the guide sleeve (32) in longitudinally displaceable manner.

2. A locking device according to Claim 1, characterised in that the guide sleeve (32) consists of the extension of a depression (35) in the supporting plate (33) which form-lockingly accommodates a locking disc (34) for arresting the pivoting movement of the wheel fork (11).

3. A locking device according to one or more of the preceding Claims, characterised in that the supporting plate (33) which comprises the guide sleeve (32) is clamped to the back (12) of the wheel fork by means of retaining tongues (36) stamped out of the wheel fork back and passing through cut-outs in the supporting plate (33).

## Revendications

1. Dispositif de blocage pour roues à pivot, en particulier roues de conteneurs à ordures (42), avec une serrure de sécurité (41), dans lequel le mouvement de pivotement de la fourche de roue (11) fixée au moyen d'une tête de palier (15) et le mouvement de rotation de la roue porteuse (10) sont susceptibles d'être bloqués par rotation d'une encoche (26) rigidement liée en rotation à un arbre de réglage et comportant une cavité d'arrêt assurant la position de déblocage, l'encoche (26) étant en appui sur une vis de réglage (23) guidée dans la tête de palier (15) et traversant celle-ci en son centre, vis qui fait saillie à travers le dos de la fourche de roue (12) et est guidée avec un trou borgne (30) dans l'alésage de fourche de roue, en étant rappelée dans le sens du déblocage par une patte élastique de freinage (37), la vis de réglage (23) étant de plus supportée non seulement dans le boîtier de guidage (20) mais aussi dans la percée de guidage du dos de la fourche de roue (12), caractérisé en ce que la percée de guidage est conformée en une douille de guidage (32) qui consiste en un élément profilé d'une pièce avec la plaque de fixation (33) chevauchant l'alésage de fourche de roue et est rigidement lié au dos de la fourche de roue (12) et en ce que l'écrou borgne (30) déplaçable longitudinalement est en prise avec une portée de guidage (31) dans la douille de guidage (32).

2. Dispositif de blocage selon la revendication 1, caractérisé en ce que la douille de guidage (32) est formée à partir du prolongement d'un creux ou d'une dépression (35) de la plaque de fixation (33) recevant en emboîtement un disque de blocage (34) pour le blocage du mouvement de pivotement de la fourche de roue (11).

3. Dispositif de blocage selon l'une ou plusieurs des revendications précédentes, caractérisé en ce que la plaque de fixation (33) comportant la douille de guidage (32) est fixée au dos de la fourche de roue (12) au moyen de languettes de retenue (36) découpées à partir du dos de la fourche de roue traversant des découpes de la plaque de fixation (33).

FIG. 1

FIG. 2